# EUROPEAN PATENT SPECIFICATION

(11) **EP 1 424 274 B1**
(45) Date of publication and mention of the grant of the patent: **02.09.2009**
(21) Application number: 03104208.8
(22) Date of filing: 14.11.2003
(51) Int. Cl.: B62J 23/00

(54) **Skid plate structure for motorcycle**
Gleitplatte für Motorrad
Plaque de glissement pour motocyclette

(30) Priority: 27.11.2002 JP 2002344346
(43) Date of publication of application: 02.06.2004
(73) Proprietor: HONDA MOTOR CO., LTD., Tokyo (JP)
(72) Inventor: KAWAGUCHI, Atsushi c/o Kabushiki Kaisha Honda Gijutsu, SAITAMA (JP); SHOJI, Yorikata c/o Kabushiki Kaisha Honda Gijutsu, SAITAMA (JP); ONO, Tetsuya c/o Kabushiki Kaisha Honda Gijutsu, SAITAMA (JP)
(74) Representative: Poulin, Gérard

(56) References cited:
- WO-A-90/02638
- JP-A- 3 248 981
- JP-A- 8 253 185
- JP-A- 2002 211 466

## Description

The present invention relates to a motorcycle in which an engine is mounted on a body frame that journals a front fork so that the front fork can be steered and a rear fork is journaled vertically oscillatably on the body frame in the rear of the engine and. More particularly, the present invention relates to an improvement on a skid plate structure in the motorcycle in which a skid plate for covering a bottom surface of the engine and preventing an obstacle from interfering with the engine is mounted in a fixed condition on the body frame.

A skid plate structure in a motorcycle, such as the one described above, is known, for example, in the Japanese Patent No. 3044730

The skid plate in the motorcycle mainly functions to skid on an obstacle as the motorcycle climbs over rocks, stones, or the like during a trial race of motorcycles, thereby contributing to climb-over performance of the motorcycle. It is therefore preferable that a bottom surface of the skid plate be smooth and flat to allow the skid plate to skid off the obstacle.

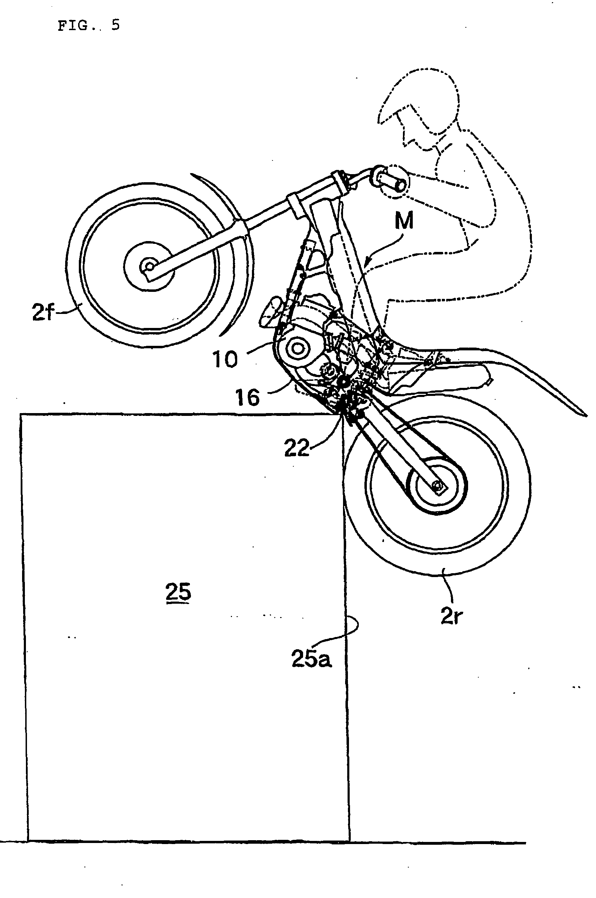

When the motorcycle climbs and scales a precipice of an obstacle by letting the skid plate thereof skid off the obstacle during a trial race as shown in FIG. 5, however, the motorcycle may come to a standstill with a rear wheel thereof got stuck on the precipice of the obstacle, being in a position with a tail thereof down. If the skid plate is easy to skid out of position in the condition described above, the motorcycle can reverse before a rider can recover a correct balance of the motorcycle.

It is therefore the object of the present invention to provide a skid plate structure in a motorcycle that prevents the motorcycle from reversing and allows the rider to recover the correct balance of the motorcycle even under the condition described in the foregoing, thereby allowing the rider to continue maneuvering the motorcycle into scaling the obstacle.

To achieve the foregoing object, the present invention is applied to a motorcycle as defined in claim 1, in which an engine is mounted on a body frame that journals a front fork so that the front fork can be steered and a rear fork is journaled vertically oscillatably on the body frame in the rear of the engine. Preferred embodiments are defined in the dependent claims.

The invention firstly comprises a skid plate for covering a bottom surface of the engine mounted in a fixed condition on the body frame and the rear end of the skid plate is characterised by a shouldered portion. The shouldered portion is composed of a vertical wall portion erected from a rear end of the skid plate and a horizontal wall portion starting with a bend made at substantially right angles with respect to, and at, an upper end of the vertical wall portion and extending rearwardly therefrom.

The motorcycle may encounter the following situation during a trial race. Specifically, the motorcycle may come to a standstill as it loses impetus immediately before it clears off a precipice of an obstacle, while letting the skid plate skid off the obstacle. Even in such a condition, the vertical wall portion and the horizontal wall portion of the shouldered portion of the skid plate are engaged with an apex of the precipice to prevent the motorcycle from reversing and allow the rider to recover a correct balance of the motorcycle, thereby allowing the rider to continue maneuvering the motorcycle into scaling the obstacle. This leads to an improved obstacle scaling ability of the motorcycle.

In addition to this, the horizontal wall portion may be arranged so as to incline rearwardly and downwardly in relation to a horizontal position of the motorcycle. ,

Again, the motorcycle may encounter the following situation during a trial race. Specifically, the motorcycle may come to a standstill as it loses impetus immediately before it clears off a precipice of an obstacle, while letting the skid plate skid off the obstacle. The second claim of the present invention offers the following effect in this situation. Namely, if a rear end of the horizontal wall portion of the shouldered portion of the skid plate reaches a top surface of the obstacle, the rear end of the horizontal wall portion having the arrangement as described above is stuck in the top surface of the obstacle as effectively by bringing the motorcycle into a position with its tail downward. The motorcycle is thereby prevented from reversing and the rider is allowed to recover the correct balance of the motorcycle and continue maneuvering the motorcycle into scaling the obstacle. Even if the rider allows the rear end of the horizontal wall portion to skid off the top surface of the obstacle, the effect from the first claim of the present invention again prevents the motorcycle from reversing. Since reversing of the motorcycle is prevented in these two steps, therefore, the obstacle scaling ability of the motorcycle can even further be enhanced.

In addition to all this, the shouldered portion may be disposed so that the vertical wall portion opposes a rear surface of a center frame portion supporting a rear portion of the engine in the body frame.

Thus, the shouldered portion is disposed so as to oppose the rear surface of the center frame portion supporting the rear portion of the engine in the body frame. A ground clearance of the skid plate is sufficiently raised as in the conventional technique regardless of whether there is a shouldered portion or not. This helps to avoid interference of the skid plate with obstacles as much as possible.

In addition to all this the shouldered portion may be supported on the center frame portion.

The following effect is offered then. Specifically, when the shouldered portion is engaged with the obstacle, a load on the shouldered portion is supported by the center frame portion, while it is absorbed by an elastic support member. This prevents the shouldered portion from being deformed or damaged, while enhancing durability thereof.

Preferred embodiments of the present invention will be explained with reference to the accompanying drawings.

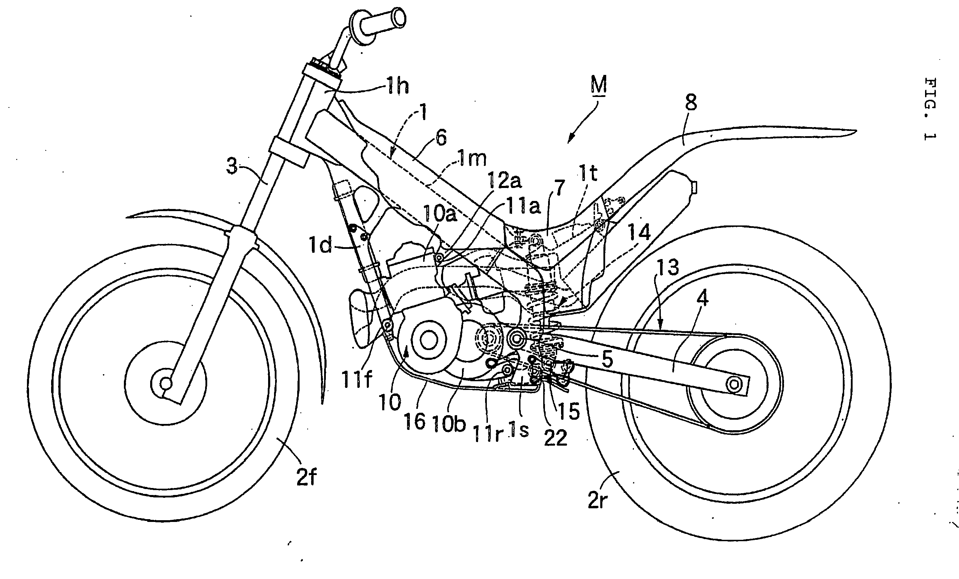

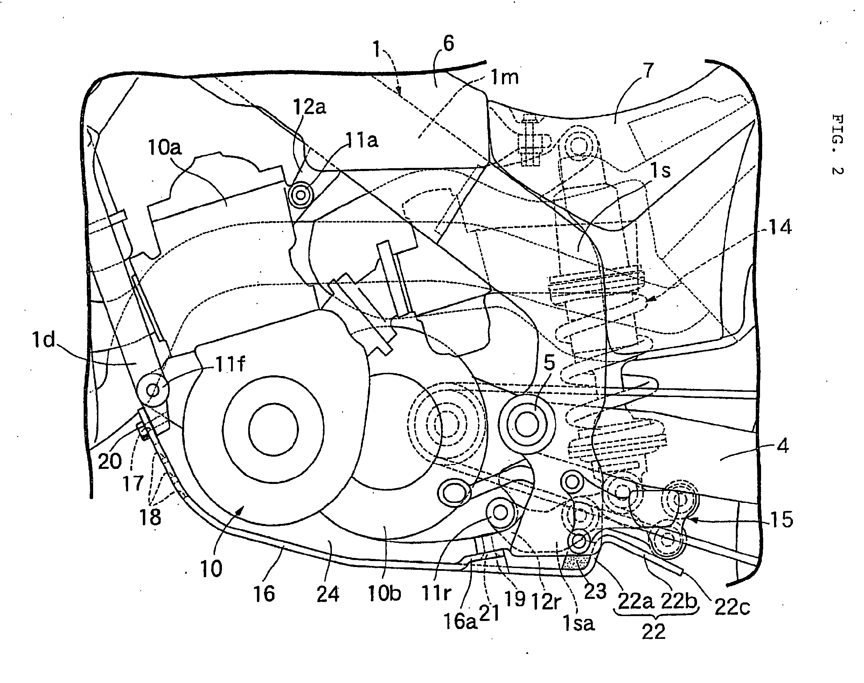

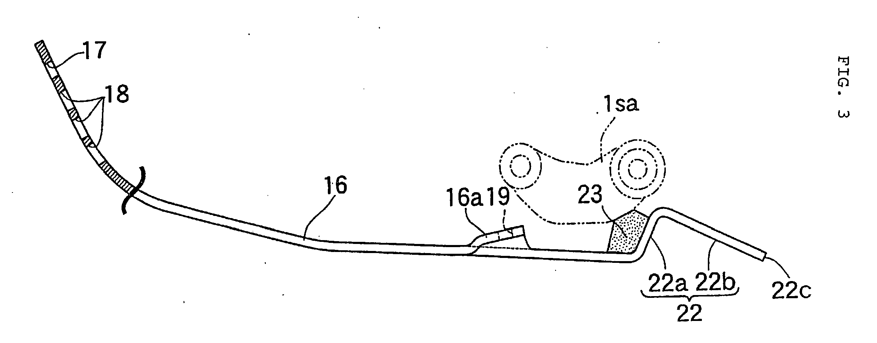

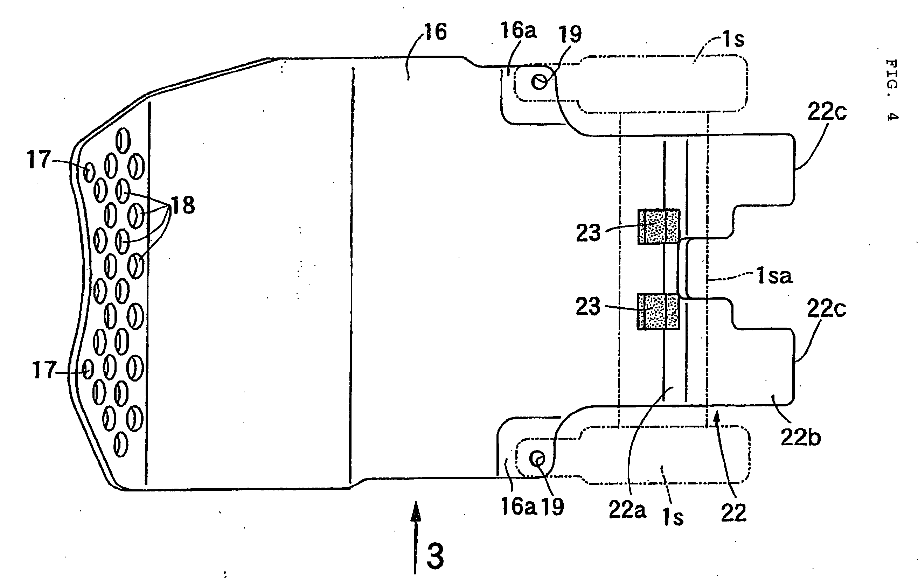

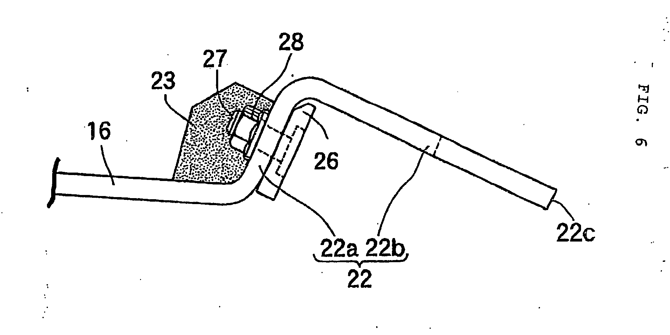

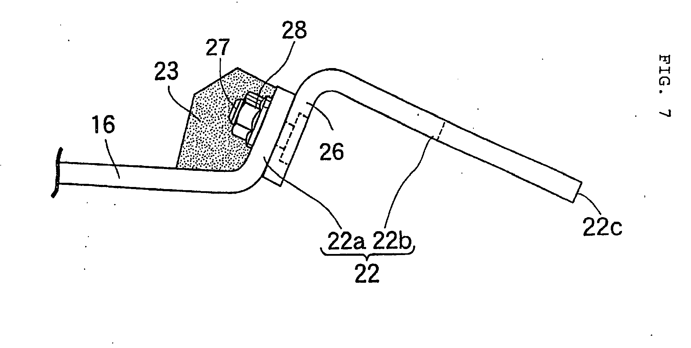

FIG. 1 is a side elevational view showing a motorcycle according to a first embodiment of the present invention. FIG. 2 is an enlarged view showing a skid plate portion shown in FIG. 1. FIG. 3 is a side elevational view showing the skid plate. FIG. 4 is a plan view showing the skid plate. FIG. 5 is an effect explanatory view. FIG. 6 is an enlarged side elevational view showing a rear end portion of a skid plate according to a second embodiment of the present invention. FIG. 7 is a view showing a third embodiment of the present invention, corresponding to the second embodiment shown in FIG. 6.

With reference to FIGS. 1 and 2, a reference numeral M represents a motorcycle for trial races. A body frame 1 of the motorcycle M is composed of the following components: specifically, a head pipe 1h; a pair of right and left main frame portions 1m extending rearwardly and downwardly from the head pipe 1h; a pair of right and left down tubes 1d extending downwardly from a front end portion of the main frame portions 1m; a pair of right and left center frame portions 1s extending downwardly from a rear end of the right and left main frames 1m and integrally connected to each other at lower end portions thereof by a cross member 1sa; and a seat stay 1t extending rearwardly and upwardly from an upper end of the center frame portions 1s.

A front fork 3 that supports a front wheel 2f is journaled on the head pipe 1h so that the front fork 3 can be steered. A rear fork 4 that supports a rear wheel 2r is attached vertically oscillatably between the pair of right and left center frame portions 1s via a pivot shaft 5.

A fuel tank 6 is mounted on the right and left main frame portions 1m. A seat 7 is mounted in an area extending from a rear end of the fuel tank 6 to the seat stay 1t. A rear fender 8 is provided in a connected row arrangement to a rear end of the seat 7.

Referring to FIGS. 1 and 2, an engine 10 disposed between the front wheel 2f and the rear wheel 2r is mounted on the body frame 1 as described in the following. Specifically, the engine 10 is provided with an upper portion mounting boss 11a protruding from a back surface of a cylinder block 10a, a front portion mounting boss 11f protruding from a front surface of a crankcase 10b, and a rear portion mounting boss 11r protruding from a rear surface of the crankcase 10b. The upper portion mounting boss 11a is bolted to an upper portion bracket 12a provided in a protruding condition on the right and left main frame portions 1m. The front portion mounting boss 11f is bolted to lower end portions of the right and left down tubes 1d. The rear portion mounting boss 11r is bolted to a rear portion bracket 12r provided in a protruding condition on a front surface of the cross member 1sa. An output from the engine 10 is transmitted to the rear wheel 2r by way of a chain gearing device 13.

A rear cushion 14 is connected to an upper end portion of the center frame portion 1s and to a linkage mechanism 15 that connects the cross member 1sa and the rear fork 4.

Referring to FIG. 2, there is arranged on an underside of the engine 10 a skid plate 16 that covers an area starting with a front surface on a lower end portion of the engine 10 and extending to cover a bottom surface thereof with a cushioning gap 24 interposed therebetween.

Referring to FIGS. 2, 3, and 4, the skid plate 16 made of an aluminum sheet is shaped into a sled with a front end portion thereof warped upward. There are provided a pair of right and left front portion mounting holes 17 and drilled a plurality of see-through holes 18 for weight reduction at the front end portion. In a middle portion in a fore-aft direction of the skid plate 16, a pair of right and left support portions 16a is formed. A bottom surface of the support portions 16a is displaced upward from an ordinary bottom surface. A rear portion mounting hole 19 is drilled in each of these support portions 16a. A front portion of the skid plate 16 is fixedly attached to lower end portions of the right and left down tubes 1d through bolts 20 installed in the front portion mounting holes 17. The right and left support portions 16a are fixedly secured to lower end portions of the right and left center frame portions 1s through bolts 21 installed in the rear portion mounting holes 19. The bottom surfaces of the support portions 16a are displaced upward relative to the ordinary bottom surface of the skid plate 16 as noted earlier. Head portions of the bolts 21 inserted in the rear portion mounting holes 19 do not therefore protrude, at this time, downward relative to the ordinary bottom surface of the skid plate 16.

A shouldered portion 22 is provided integrally in a connected row arrangement to a rear end of the skid plate 16. The shouldered portion 22 is composed of the following two portions. One is a vertical wall portion 22a that forms a continued portion from the rear end of the skid plate 16 and stands upright so as to oppose a back surface of the cross member 1sa. The other is a horizontal wall portion 22b that starts with a bend made at right angles with respect to, and at, an upper end of the vertical wall portion 22a and extends rearwardly therefrom. The horizontal wall portion 22b is arranged so as to incline rearwardly and downwardly in relation to a horizontal position of the motorcycle M. A rear end 22c of the horizontal wall portion 22b is in a protruding condition without being interfered with any other objects.

A pair of right and left elastic support members 23 made of rubber is bonded to an upper surface in the rear end portion of the skid plate 16, extending up to a front surface of the vertical wall portion 22a. These elastic support members 23 are supported on a bottom surface of the cross member 1sa. To state it from another viewpoint, the shouldered portion 22 is supported on the cross member 1sa by way of elastic support members 23.

The effects of this embodiment of the present invention will be explained.

Reference is now made to FIG. 5. In a scaling section of a trial race of the motorcycle M, the motorcycle M attempts to climb up an obstacle 25 having a precipice 25a therein, and the motorcycle M may come to a standstill as it loses impetus immediately before it clears off the precipice 25a of the obstacle 25, while letting the skid plate 16 skid off the obstacle 25. If, in this case, the rear end 22c of the horizontal wall portion 22b forming part of the shouldered portion 22 of the skid plate 16 reaches a top surface of the obstacle 25, the rear end 22c of the horizontal wall portion 22b having the arrangement as described above is stuck in the top surface of the obstacle 25 substantially perpendicularly with respect thereto by bringing the motorcycle M into a position with its tail downward. The motorcycle M is thereby prevented from reversing. The rider is then allowed to immediately recover a correct balance of the motorcycle M and continue maneuvering the motorcycle M into scaling the obstacle 25.

The rider may allow the rear end 22c of the horizontal wall portion 22b to skid off the top surface of the obstacle 25. Even in such a condition, the vertical wall portion 22a and the horizontal wall portion 22b of the shouldered portion 22 of the skid plate 16 are engaged with an apex of the precipice 25a of the obstacle 25. This prevents the motorcycle M from reversing and allows the rider to recover the correct balance of the motorcycle M, thereby allowing the rider to continue maneuvering the motorcycle M into scaling the obstacle 25. As described in the foregoing, the motorcycle M is prevented from reversing in two steps, which greatly improves an obstacle scaling ability of the motorcycle.

A load applied at this time to the shouldered portion 22 is supported by the cross member 1sa of the center frame portion 1s, while its being cushioned by the elastic support member 23. This prevents the shouldered portion 22 from being deformed or damaged, thus contributing to an enhanced durability of the same.

The shouldered portion 22 is disposed so that the vertical wall portion 22a thereof opposes the back surface of the cross member 1sa of the center frame portion 1s. This allows a ground clearance of the skid plate 16 to be sufficiently raised as in the conventional technique regardless of whether there is a shouldered portion 22 or not. This helps to avoid interference of the skid plate 16 with the obstacle 25 as much as possible.

A second embodiment of the present invention will be described with reference to FIG. 6.

According to the second embodiment of the present invention, a flat reinforcement plate 26 is joined to the back surface of the vertical wall portion 22a of the shouldered portion 22 of the skid plate 16 using a bolt 27 and a nut 28. A head portion of the bolt 27 is buried within a back surface of the reinforcement plate 26. Other components are the same as those of the first embodiment. In FIG. 6, similar reference numerals are used to denote similar components, and the explanation for the same will be omitted.

In accordance with the second embodiment of the present invention, the reinforcement plate 26 is used to give a robust and flat back surface to the vertical wall portion 22a integrated with the skid plate 16. This enhances engageability of the shouldered portion 22 with the obstacle 25 and durability of the shouldered portion 22.

A third embodiment of the present invention will be explained with reference to FIG. 7.

According to the third embodiment of the present invention, the horizontal wall portion 22b is formed by bending an upper end of the reinforcement plate 26 in the second embodiment of the present invention. Other components are the same as those of the second embodiment. In FIG. 7, similar reference numerals are used to denote similar components, and the explanation for the same will be omitted.

In accordance with the third embodiment of the present invention, the reinforcement plate 26 and the horizontal wall portion 22b formed by bending at right angles are a small part. The part can therefore be easily and formed accurately without regard to the skid plate 16.

It will be understood that the foregoing description has been made on the specific embodiments of the present invention. The invention is not limited thereto, but numerous changes in the details of construction may be resorted to without departing from the scope of the invention as claimed.

### [Effects of the Invention]

In accordance with the first claim of the present invention, there is provided the motorcycle in which the engine is mounted on the body frame that journals the front fork so that the front fork can be steered and the rear fork is journaled vertically oscillatably on the body frame in the rear of the engine. In this motorcycle, the skid plate for covering the bottom surface of the engine is mounted in a fixed condition on the body frame. The shouldered portion is provided in a connected row arrangement to the rear end of the skid plate. The shouldered portion is composed of the vertical wall portion erected from the rear end of the skid plate and the horizontal wall portion starting with the bend made at substantially right angles with respect to, and at, the upper end of the vertical wall portion and extending rearwardly therefrom. The motorcycle may encounter the following situation during a trial race. Specifically, the motorcycle may come to a standstill as it loses impetus immediately before it clears off a precipice of an obstacle, while letting the skid plate skid off the obstacle. Even in such a condition, the vertical wall portion and the horizontal wall portion of the shouldered portion of the skid plate are engaged with an apex of the precipice to prevent the motorcycle from reversing and allow the rider to recover a correct balance of the motorcycle, thereby allowing the rider to continue maneuvering the motorcycle into scaling the obstacle. This leads to an improved obstacle scaling ability of the motorcycle.

In addition, according to the second claim, the horizontal wall portion may be arranged so as to incline rearwardly and downwardly in relation to the horizontal position of the motorcycle. If the motorcycle comes to a standstill as it loses impetus immediately before it clears off a precipice of an obstacle, while letting the skid plate skid off the obstacle, there is offered the following effect in two steps. Namely, the rear end of the horizontal wall portion is stuck in the top surface of the obstacle as effectively as a first step. As a second step, the vertical wall portion and the horizontal wall portion of the shouldered portion are engaged with the apex of the precipice of the obstacle. The motorcycle is thereby prevented in these two steps from reversing. The obstacle scaling ability of the motorcycle can even further be enhanced.

In addition, the shouldered portion may be disposed so that the vertical wall portion opposes the back surface of the center frame portion supporting the rear portion of the engine in the body frame. This arrangement allows a ground clearance of the skid plate to be sufficiently raised as in the conventional technique regardless of whether there is a shouldered portion or not. This helps to avoid interference of the skid plate with obstacles as much as possible.

In addition, the shouldered portion may be supported on the center frame portion. The following effect is offered then. Specifically, when the shouldered portion is engaged with the obstacle, the load applied to the shouldered portion is supported by the center frame portion, while it is absorbed by the elastic support member. This prevents the shouldered portion from being deformed or damaged, while enhancing durability thereof.

## Claims

1. A motorcycle having an engine (10) mounted on a body frame (1) journaling a front fork (3) so that the front fork (3) can be steered and a rear fork (4) journaled vertically oscillatably on the body frame (1) in the rear of the engine (10), wherein a skid plate (16) for covering a bottom surface of the engine (10) is mounted in a fixed condition on the body frame (1) **characterised in that** the skid plate comprises a shouldered portion (22), which is composed of a vertical wall portion (22a) erected from a rear end of the skid plate (16) and a horizontal wall portion (22b) starting with a bend made at substantially right angles with respect to, and at, an upper end of the vertical wall portion (22a) and extending rearwardly from the upper end of the vertical wall portion (22a), provided in a connected row arrangement to the rear end of the skid plate (16).

2. The motorcycle according to claim 1, wherein the horizontal wall portion (22b) is arranged so as to incline rearwardly and downwardly relative to a horizontal position of the motorcycle (M).

3. The motorcycle according to claim 1 or 2, wherein the shouldered portion (22) is disposed so that the vertical wall portion (22a) opposes a back surface of a center frame portion (1s) supporting a rear portion of the engine (10) in the body frame (1).

4. The motorcycle according to any of claims 1, 2, and 3, wherein the shouldered portion (22) is supported on the center frame portion (1s).

## Patentansprüche

1. Motorrad, das einen Motor (10), der an einem Hauptrahmen (1) angebracht ist, an den eine Vordergabel (3) so angelagert ist, dass die Vordergabel (3) gelenkt werden kann, und eine am Hauptrahmen (1) hinter dem Motor (10) vertikal schwingbar angelagerte Hintergabel (4) aufweist, wobei eine Gleitplatte (16) zum Abdecken einer Bodenfläche des Motors (10) in einem fixierten Zustand am Hauptrahmen (1) angebracht ist, **dadurch gekennzeichnet, dass** die Gleitplatte einen Schulterbereich (22) umfasst, welcher sich aus einem vertikalen Wandbereich (22a), der sich von einem hinteren Ende der Gleitplatte (16) aufrichtet, und einem horizontalen Wandbereich (22b) zusammensetzt, der mit einer Biegung beginnt, die bei im Wesentlichen rechten Winkeln mit Bezug auf und an einem oberen Ende des vertikalen Wandbereiches (22a) gemacht ist, und sich vom oberen Ende des vertikalen Wandbereiches (22a) nach hinten erstreckt, der in einer verbundenen Fluchtanordnung zum hinteren Ende der Gleitplatte (16) vorgesehen ist.

2. Motorrad nach Anspruch 1, wobei der horizontale Wandbereich (22b) derart angeordnet ist, dass er sich relativ zu einer horizontalen Position des Motorrades (M) nach hinten und nach unten neigt.

3. Motorrad nach Anspruch 1 oder 2, wobei der Schulterbereich (22) so angeordnet ist, dass der vertikale Wandbereich (22a) einer Rückfläche eines zentralen Rahmenbereiches (1s), der einen hinteren Bereich des Motors (10) im Hauptrahmen (1) unterstützt, gegenübersteht.

4. Motorrad nach einem der Anspruche 1, 2 oder 3, wobei der Schulterbereich (22) am zentralen Rahmenbereich (1s) unterstützt ist.

## Revendications

1. Motocyclette ayant un moteur (10) monté sur un châssis (1) faisant tourillonner une fourche avant (3) de sorte que la fourche avant (3) peut être dirigée et une fourche arrière (4) tourillonnant verticalement de manière oscillante sur le châssis (1) à l'arrière du moteur (10), dans laquelle une plaque de protection (16) pour recouvrir une surface inférieure du moteur (10) est montée dans une condition fixe sur le châssis (1), **caractérisée en ce que** la plaque de protection comprend une partie épaulée (22), qui est composée d'une partie de paroi verticale (22a) érigée à partir d'une extrémité arrière de la plaque de protection (16) et une partie de paroi horizontale (22b) commençant avec une courbe, réalisée selon un angle sensiblement droit par rapport à une extrémité supérieure de la partie de paroi verticale (22a) et à l'endroit de ladite extrémité, et s'étendant vers l'arrière à partir de l'extrémité supérieure de la partie de paroi verticale (22a), prévue dans un agencement de prolongement raccordé à l'extrémité arrière de la plaque de protection (16).

2. Motocyclette selon la revendication 1, dans laquelle la partie de paroi horizontale (22b) est agencée afin de s'incliner vers l'arrière et le bas par rapport à une position horizontale de la motocyclette (M).

3. Motocyclette selon la revendication 1 ou 2, dans laquelle la partie épaulée (22) est disposée de sorte que la partie de paroi verticale (22a) s'oppose à une surface arrière d'une partie de châssis central (1s) supportant une partie carrière du moteur (10) dans le châssis (1).

4. Motocyclette selon l'une quelconque des revendications 1, 2 et 3, dans laquelle la partie épaulée (22) est supportée sur la partie de châssis central (1s).
